# EUROPÄISCHE PATENTANMELDUNG

(11) **EP 1 048 675 A1**
(43) Veröffentlichungstag der Anmeldung: **02.11.2000**
(21) Anmeldenummer: 00107966.4
(22) Anmeldetag: 17.04.2000
(51) Int. Cl.: C08F 36/04, C08F 4/54

(54) **Verfahren zur Suspensions-Polymerisation von konjugierten Dienen**

(30) Priorität: 30.04.1999 DE 19919870
(71) Anmelder: Bayer Aktiengesellschaft, 51368 Leverkusen (DE)
(72) Erfinder: Knauf, Thomas, Dr., 41562 Dormagen (DE); Sylvester, Gerd, Dr., 51375 Leverkusen (DE); Schmid, Claudia, Dr., 51381 Leverkusen (DE); Osman, Akhtar, Sarnia, Ontario, N7V 2B8 (CA)

(57) **Zusammenfassung**

Die Erfindung betrifft ein Verfahren zur Suspensions-Polymerisation von konjugierten Dienen, in Kohlenwasserstoffgemischen mit über 80 % Volumenanteil an C₄-Kohlenwasserstoffen, dadurch gekennzeichnet, dass man in Gegenwart einer Verbindung von Seltenen Erden, einer oder mehrerer Aluminiumverbindungen und gegebenenfalls einer weiteren Lewis-Säure polymerisiert, die erfindungsgemäß herstellbaren Polymerisate, sowie deren Verwendung zur Herstellung von Formkörpern aller Art, insbesondere Reifen, technische Gummiwaren und zur Abmischung mit Polystyrol (HIPS).

## Beschreibung

Die Erfindung betrifft ein neues Verfahren zur Suspensions-Polymerisation von konjugierten Dienen, insbesondere Butadien und/oder Isopren in technischen C₄-Kohlenwasserstoffgemischen.

Polybutadien mit einem hohen Anteil an cis-1,4-Einheiten wird seit langer Zeit in großtechnischem Maßstab produziert und für die Herstellung von Reifen und anderen Gummiwaren verwendet. Die Polymerisation wird dabei in flüssiger Phase unter Verwendung der verschiedensten Katalysatorsysteme in Lösung durchgeführt.

Polybutadiene mit einem besonders hohen Anteil an cis-1,4-Einheiten werden besonders vorteilhaft wie in der EP-A-01 11 184 beschrieben hergestellt. Das dort offenbarte Katalysatorsystem besteht aus einem Carboxylat der Seltenen Erden, einem Aluminiumtrialkyl und/oder Alkylaluminiumhydrid und einer weiteren Lewis-Säure.

IT-764 295 offenbart die Polymerisation von Butadien in C₄-Fraktionen, die von Isobutanen befreit worden sind und zur Verbesserung der Löslichkeit des Polybutadiens 5 bis 20 % Aromaten enthalten.

Die Polymerisation von konjugierten Dienen in Lösung hat den Nachteil, dass die Lösung viskos und daher die Feststoffkonzentration in der Regel auf 10 bis 20 Gew.-% begrenzt ist.

Es ist auch bekannt, die Polymerisation von konjugierten Dienen ohne Zusatz von Lösungsmitteln in den reinen flüssigen Monomeren durchzuführen. Bei dieser Verfahrensführung müssen jedoch bei hohen Umsätzen große Wärmemengen abgeführt werden, was sich aufgrund der hohen Viskosität des Reaktionsgemisches schwer vollziehen lässt und deshalb teure Apparate erfordert und ein gewisses Gefahrenpotential darstellt.

Die Polymerisation in der Gasphase hat den entscheidenden Nachteil, dass pro Umlauf durch den Reaktor immer nur ein sehr geringer Umsatz stattfindet. Ein entsprechendes Verfahren ist in US-4 994 534 beschrieben.

Eine Verbesserung könnten hier Suspensions-Polymerisationsverfahren darstellen. Hierbei wird die Polymerisation in Gegenwart eines Verdünnungsmittels durchgeführt, in dem das entstehende Polymere nicht löslich ist. Das Polymere fällt in feinverteilter Form an und ist im Verdünnungsmittel suspendiert. Deshalb weisen solche Suspensionen im Gegensatz zur Lösungs- oder Massepolymerisation nur eine sehr geringe Viskosität auf, wodurch die Wärmeabführung und das Fließverhalten wesentlich verbessert werden und deshalb hohe Feststoffkonzentrationen und hohe Raum-Zeit-Ausbeuten möglich sind.

Die DE-A1-229 138 offenbart ein Verfahren zur selektiven Polymerisation von Butadien aus C₄-Fraktionen mit Lithium-Katalysatoren. Die erzielten mittleren Molmassen sind hierbei mit bis zu 10 000 jedoch äußerst gering und außerdem sind mittels Lithium-Katalysatoren keine cis-Polybutadiene erhältlich.

EP-A 773 243 offenbart einen Prozess zur Polymerisation von α-Olefinen und gegebenenfalls Diolefinen in Suspension. Hierbei wird ein inertes Lösungs-/Verdünnungsmittel eingesetzt und z.B. Butadien zugegeben. Hierzu muss das Butadien in reiner Form vorliegen.

Die Bereitstellung, das zur Polybutadienproduktion benötigten Butadiens, geschieht heutzutage technisch aufwendig durch Abtrennung des Butadiens aus technischen C₄-Kohlenwasserstoffgemischen. Diesen zusätzlichen Trennschritt würde man gerne einsparen. Jedoch enthalten technische C₄-Kohlenwasserstoffgemische häufig störende Beimengungen, insbesondere 1,2-Butadien.

Es bestand daher weiterhin Bedarf an einem Verfahren zur Polymerisation von Dienen in Kohlenwasserstoffgemischen mit über 80 % Anteil an C₄-Kohlenwasserstoffen zu cis-haltigen Polydienen.

Die Aufgabe wird erfindungsgemäß gelöst durch ein Verfahren zur Suspensions-Polymerisation von konjugierten Dienen in Kohlenwasserstoffgemischen mit über 80 % Vol.-Anteil an C₄-Kohlenwasserstoffen, dadurch gekennzeichnet, dass man in Gegenwart einer Verbindung der Seltenen Erden, einer oder mehrerer Aluminiumverbindungen und gegebenenfalls einer weiteren Lewis-Säure polymerisiert.

Konjugierte Diene im Sinne der Erfindung sind insbesondere 1,3-Butadien und Isopren.

Die erfindungsgemäßen Kohlenwasserstoffgemische enthalten mindestens 80 Vol.-% C₄-Kohlenwasserstoffe, insbesondere mindestens 90 Vol.-% C₄-Kohlenwasserstoffe und ganz besonders mindestens 95 Vol.-% C₄-Kohlenwasserstoffe.

C₄-Kohlenwasserstoffe im Sinne der Erfindung sind alle dem Fachmann bekannten gesättigten, einfach oder mehrfach ungesättigten Kohlenwaserstoffe mit 4 Kohlenstoffatomen mit Ausnahme von Alkinen. Beispiel für erfindungsgemäße C₄-Kohlenwasserstoffe sind Butane, wie n-Butan, i-Butan und Cyclobutan, Butene, wie 1-Buten, 2-Buten und i-Buten sowie Butadiene, wie 1,3-Butadien und 1,2-Butadien. Ein besonderer Vorteil des hier beschriebenen Verfahrens ist, dass 1,2-Butadien nicht wie bei Verfahren gemäß dem Stand der Technik entfernt werden muss. Dies ist nicht nur ökonomisch, sondern auch ökologisch günstig. Aus diesem Grunde enthalten die erfindungsgemäßen C₄-Kohlenwasserstoffe bevorzugt Beimengungen an nicht-entferntem 1,2-Butadien. Alkine stören das Verfahren und sollten weitgehend entfernt werden.

Bevorzugt werden C₄-Kohlenwasserstoffgemische der folgenden Vol.-Zusammensetzung eingesetzt:

| | |
|---|---|
| 1,3-Butadien | 30 - 50 % |
| Butene | 33 - 53 % |
| Butane | 5 - 15 % |
| 1,2-Butadien | 0,001 - 1 % |
| Alkine | 0,05 % |
| Sonstige | 0,1 - 1 % |

Weiterhin bevorzugt werden C₄-Kohlenwasserstoffgemische der folgenden Volumen-Zusammensetzung als Verdünnungsmittel eingesetzt:

| | |
|---|---|
| 1,3-Butadien | 0 - 2 % |
| Butene | 66 - 80 % |
| Butane | 18 - 33 % |
| 1,2-Butadien | 0,001 - 0,4 % |
| Alkine | 0 |
| Sonstige | 0 - 0,6 % |

Weiterhin bevorzugt werden technische C₄-Kohlenwasserstoffgemische (C₄-hydrocarbons and derivatives: resources, production, marketing, J. Schulze, M. Homann, Springer-Verlag Berlin, 1989, Chapter 1.2-1.4), die dem Fachmann unter C₄-Cut, Raffinat-1 und Raffinat-2 bekannt sind. Diese können selbstverständlich 1,2-Butadien-Beimengungen enthalten.

Diese technischen C4-Kohlenwasserstoffgemische stammen bevorzugt direkt aus einem Steam-Cracker und werden nach Entfernung der Alkine ohne weiteren Reinigungs- oder Aufkonzentrationsschritt eingesetzt.

Weiterhin bevorzugt werden reine Butane oder Butan/1,2-Butadien-Gemische mit bis zu 5 Vol.-% 1,2-Butadienanteil eingesetzt.

Für den Fachmann ist es trivial, dass sich die genannten Volumen-%-Anteile der einzelnen Komponenten der C₄-Kohlenwasserstoffgemische zu 100 % ergänzen müssen.

Falls die erfindungsgemäß verwendbaren C₄-Kohlenwasserstoffgemische bereits polymerisierbare konjugierte Diene enthalten, können diese ohne weitere Zwischenschritte direkt in das erfindungsgemäße Verfahren eingesetzt werden. Das C₄-Kohlenwasserstoffgemisch wirkt dann sowohl als Verdünnunngsmittel, als auch als Monomerreservoir. Selbstverständlich ist es aber auch möglich, weitere konjugierte Diene hinzuzumischen oder aber die Konzentration bereits vorhandener konjugierter Diene zu erhöhen. Es ist hier jedoch darauf zu achten, dass das Verfahren weiterhin eine Suspensionspolymerisation und keine Lösungspolymerisation darstellt. Die geeigneten Konzentrationen an Monomer oder Monomeren lassen sich durch wenige Vorversuche leicht ermitteln. Die Monomerkonzentrationen liegen üblicherweise zwischen 0,1 und 60 Volumen-%, insbesondere 5-50, ganz besonders 10-40.

Einsetzbare Kohlenwasserstoffgemische können bis zu 20 % Volumen-Anteil an höheren Kohlenwasserstoffen haben. Bei diesen ist jedoch darauf zu achten, dass diese die Polymerisation nicht nachteilig beeinflussen. Geeignete höhere Kohlenwasserstoffe sind lineare, verzweigte oder cyclische Kohlenwasserstoffe, die gesättigt, ungesättigt oder aromatisch sein können, wie C₅-C₅₀-Alkane, wie n-Pentan, i-Pentan, Cyclopentan, n-Hexan, i-Hexan, Cyclohexan, n-Heptan, i-Heptan, n-Octan, i-Octan, Nonan, Decan, Undecan, wie C₅-C₅₀-Alkene, wie Penten, Cyclopenten, Hexen, Cyclohexen, Hepten, Octen, Nonen, Decen, Undecan, wie nicht-konjugiert mehrfach ungesättigte Kohlenwaserstoffe, wie 1,4-Pentadien, Hexadiene, Cyclohexadiene, Heptadiene, Octadi- oder Triene, Nonadi- oder Triene, oder wie Aromaten, wie Benzol und Toluol.

Die Verbindungen der Seltenen Erden sind bevorzugt
ein Alkoholat der Seltenen Erden (I),
ein Carboxylat der Seltenen Erden (II),
eine Komplexverbindung der Seltenen Erden mit Diketonen (III)
   und/oder
eine Additionsverbindung der Halogenide der Seltenen Erden mit einer Sauerstoff- oder Stickstoff-Donator-Verbindung (IV) folgender Formeln:

   (RO)₃M (I)

   (R-CO₂)₃M (II)

   (RCOCHCOR)₃M (III)

   und

   MX₃ . y Donator (IV),

   wobei in den Formeln
   - M: dreiwertiges Element der Seltenen Erden mit den Ordnungszahlen 21, 39 oder 57 bis 71 im Periodensystem der Elemente nach IUPAC bedeutet,
   - R: gleich oder verschieden ist und Alkylreste, verzweigt oder nicht verzweigt mit 1 bis 10 Kohlenstoffatomen bedeutet,
   - X: für Chlor, Brom oder Iod steht
   und y 1 bis 6 bedeutet.

Bevorzugt werden solche Verbindungen, in denen M Lanthan, Cer, Praseodym, Neodym oder Gadolinium oder ein Gemisch von Elementen der Seltenen Erden, welches mindestens eines der Elemente Lanthan, Cer, Praseodym, Neodym oder Gadolinium zu wenigstens 10 Gew.% enthält, bedeutet. Ganz besonders bevorzugt sind Verbindungen, in denen M Lanthan oder Neodym, bzw. ein Gemisch von Seltenen Erden, welches Lanthan oder Neodym zu mindestens 30 Gew.% enthält, bedeutet.

Als Reste R in den Formeln (I) bis (IV) sind insbesondere geradkettige oder verzweigte Alkylreste mit 1 bis 20 Kohlenstoffatomen, bevorzugt 1 bis 15 Kohlenstoffatomen, zu nennen, wie Methyl, Ethyl, n-Propyl, n-Butyl, n-Pentyl, Isopropyl, Isobutyl, tert.-Butyl, 2-Ethylhexyl, neo-Pentyl, neo-Octyl, neo-Decyl, neo-Dodecyl.

Als Alkoholate der Seltenen Erden (I) werden z. B. genannt: Neodym(III)-n-propanolat, Neodym(III)-n-butanolat, Neodym(III)-n-decanolat, Neodym(III)-iso-propanolat, Neodym(III)-2-ethyl-hexanolat, Praseodym(III)-n-propanolat, Praseodym(III)-n-butanolat, Praseodym(III)-n-decanolat, Praseodym(III)-iso-propanolat, Praseodym(III)-2-ethyl-hexanolat, Lanthan(III)-n-propanolat, Lanthan(III)-n-butanolat, Lanthan(III)-n-decanolat, Lanthan(III)-iso-propanolat, Lanthan(III)-2-ethyl-hexanolat, bevorzugt Neodym(III)-n-butanolat, Neodym(III)-n-decanolat, Neodym-(III)-2-ethyl-hexanolat.

Als Carboxylate der Seltenen Erden (II) sind geeignet: Lanthan(III)-propionat, Lanthan-(III)-diethylacetat, Lanthan(III)-2-ethyl-hexanoat, Lanthan(III)-stearat, Lanthan(III)-benzoat, Lanthan(III)-cyclohexancarboxylat, Lanthan(III)-oleat, Lanthan(III)-versatat, Lanthan(III)-naphthenat, Praseodym(III)-propionat, Praseodym(III)-diethylacetat, Praseodym(III)-2-ethylhexanoat, Praseodym(III)-stearat, Praseodym(III)-benzoat, Praseodym(III)-cyclohexancarboxylat, Praseodym(III)-oleat, Praseodym(III)-versatat, Praseodym(III)-naphthenat, Neodym(III)-propionat, Neodym(III)-diethylacetat, Neodym(III)-2-ethylhexanoat, Neodym(III)-stearat, Neodym(III)-bezoat, Neodym(III)-cyclohexancarboxylat, Neodym(III)-oleat, Neodym(III)-versatat, Neodym(III)-naphthenat, bevorzugt Neodym(III)-2-ethylhexanoat, Neodym(III)-versatat, Neodym(III)-naphthenat. Besonders bevorzugt wird Neodym-versatat eingesetzt.

Als Komplexverbindungen mit Diketonen der Seltenen Erden (III) seien genannt: Lanthan(III)-acetylacetonat, Praseodym(III)-acetylacetonat, Neodym(III)-acetylacetonat, bevorzugt Neodym(III)-acetylacetonat.

Als Additionsverbindungen der Seltenen Erden mit Donatoren (IV) werden beispielsweise genannt: Lanthan(III)-chlorid mit Tributylphosphat, Lanthan(III)-chlorid mit Tris(2-ethyl-hexyl)phosphat, Lanthan(III)-chlorid mit Tetrahydrofuran, Lanthan(III)-chlorid mit iso-Propanol, Lanthan(III)-chlorid mit Pyridin, Lanthan(III)-chlorid mit 2-Ethylhexanol, Lanthan(III)-chlorid mit Ethanol, Praseodym(III)-chlorid mit Tributylphosphat, Praseodym(III)-chlorid mit Tetrahydrofuran, Praseodym(III)-chlord mit iso-Propanol, Praseodym(III)-chlorid mit Pyridin, Praseodym(III)-chlorid mit 2-Ethylhexanol, Praseodym(III)-chlorid mit Ethanol, Neodym(III)-chlorid mit Tributylphosphat, Neodym(III)-chlorid mit Tris(2-ethyl-hexyl)phosphat Neodym(III)-chlorid, Neodym(III)-chlorid mit Tetrahydrofuran, Neodym(III)-chlorid mit iso-Propanol, Neodym(III)-chlorid mit Pyridin, Neodym(III)-chlorid mit 2-Ethylhexanol, Neodym(III)-chlorid mit Ethanol, Lanthan(III)-bromid mit Tributylphosphat, Lanthan(III)-bromid mit Tetrahydrofuran, Lanthan(III)-bromid mit iso-Propanol, Lanthan(III)-bromid mit Pyridin, Lanthan(III)-bromid mit 2-Ethylhexanol, Lanthan(III)-bromid mit Ethanol, Praseodym(III)-bromid mit Tributylphosphat, Praseodym(III)-bromid mit Tetrahydrofuran, Praseodym(III)-bromid mit iso-Propanol, Praseodym(III)-bromid mit Pyridin, Praseodym(III)-bromid mit 2-Ethylhexanol, Praseodym(III)-bromid mit Ethanol, Neodym(III)-bromid mit Tributylphosphat, Neodym(III)-bromid mit Tetrahydrofuran, Neodym(III)-bromid mit iso-Propanol, Neodym(III)-bromid mit Pyridin, Neodym(III)-bromid mit 2-Ethylhexanol, Neodym(III)-bromid mit Ethanol, bevorzugt Lanthan(III)-chlorid mit Tributylphosphat, Lanthan(III)-chlorid mit Pyridin, Lanthan(III)-chlorid mit 2-Ethylhexanol, Praseodym(III)-chlorid mit Tributylphosphat, Praseodym(III)-chlorid mit 2-Ethylhexanol, Neodym(III)-chlorid mit Tributylphosphat, Neodym(III)-chlorid mit Tetrahydrofuran, Neodym(III)-chlorid mit 2-Ethylhexanol, Neodym(III)-chlorid mit Pyridin, Neodym(III)-chlorid mit 2-Ethylhexanol, Neodym(III)-chlorid mit Ethanol.

Die Verbindungen der Seltenen Erden können einzeln oder im Gemisch untereinander eingesetzt werden.

Ganz besonders bevorzugt werden Neodymversatat, die Additionsverbindung von Neodym(III)-chlorid mit Ethanol oder Tris(2-ethyl-hexyl)phosphat, Neodymoctanoat und/oder Neodymnaphthenat als Verbindung der Seltenen Erden.

Als Aluminiumverbindungen eignen sich Aluminiumtrialkyle, Dialkylaluminiumhydride und/oder Aluminoxane der allgemeinen Formeln

AlR₃ (V)

HAlR₂ (VI)

R(AlO)ₙAlR₂ (VII)

gegebenenfalls in Kombination mit einer weiteren Lewis-Säure.

In den Formel (V) bis (VII) bedeutet n eine ganze Zahl im Bereich von 1 bis 60, R einen geradkettigen oder verzweigten Alkylrest mit 1 bis 10 C-Atomen, bevorzugt 1 bis 4 C-Atomen.

Beispiele für geeignete Aluminiumalkyle der Formel (V) und (VI) sind:

Trimethylaluminium, Triethylaluminium, Tri-n-propylaluminium, Triisopropylaluminium, Tri-n-butylaluminium, Triisobutylaluminium, Tripentylaluminium, Trihexylaluminium, Tricyclohexylaluminium, Trioctylaluminium, Diethylaluminiumhydrid, Di-n-butylaluminiumhydrid und Di-isobutylaluminiumhydrid. Bevorzugt werden Triethylaluminium, Triisobutylaluminium und Di-iso-butylaluminiumhydrid. Besonders bevorzugt wird Di-isobutylaluminiumhydrid.

Als Beispiele für Alumoxane (VII) werden genannt: Methylalumoxan, Ethylalumoxan und iso-Butylalumoxan, bevorzugt Methylalumoxan und iso-Butylalumoxan.

Weitere geeignete Lewis-Säuren sind beispielsweise Organometallhalogenide, in denen das Metallatom der Gruppe 3a) oder 4a) angehört, sowie Halogenide der Elemente der Gruppe 13, 14 und 15 des Periodensystems, wie es im 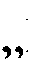 Handbook of Chemistry and Physics" 76th Edition 1995 dargestellt ist.

Genannt werden insbesondere:
Methylaluminiumdibromid, Methylaluminiumdichlorid, Ethylaluminiumdibromid, Ethylaluminiumdichlorid, Butylaluminiumdibromid, Butylaluminiumdichlorid, Dimethylaluminiumbromid, Dimethylaluminiumchlorid, Diethylaluminiumbromid, Diethylaluminiumchlorid, Dibutylaluminiumbromid, Dibutylaluminiumchlorid, Methylaluminiumsesquibromid, Methylaluminiumsesquichlorid, Ethylaluminiumsesquibromid, Ethylaluminiumsesquichlorid, Aluminiumtribromid, Antimontrichlorid, Antimonpentachlorid, Phosphortrichlorid, Phosphorpentachlorid, Zinntetrachlorid.

Bevorzugt werden Diethylaluminiumchlorid, Ethylaluminiumsesquichlorid, Ethylaluminiumdichlorid, Diethylaluminiumbromid, Ethylaluminiumsesquibromid und/oder Ethylaluminiumdibromid eingesetzt.

Als weitere Lewis-Säuren können auch die Reaktionsprodukte aus Aluminiumverbindungen der allgemeinen Formeln (V) bis (VII) mit Halogenen oder Halogenverbindungen, z. B. Triethylaluminium mit Brom oder Triethylaluminium mit Butylchlorid, eingesetzt werden. In diesem Fall kann die Umsetzung getrennt durchgeführt werden, oder die für die Umsetzung benötigte Menge der Alkylaluminiumverbindung wird zu der Aluminiumverbindung benötigten Menge addiert.

Bevorzugt werden Butylchlorid und Butylbromid.

Auf die weitere Lewis-Säure kann verzichtet werden, wenn der allgemeinen Formeln (V) bis (VII) eine Verbindung der Formel (VII) oder als Verbindung der Seltenen Erden eine Verbindung der Formel (IV) eingesetzt wird.

Das Molverhältnis, in denen die Katalysatorkomponenten eingesetzt werden, kann in weiten Grenzen variiert werden.

Das Molverhälnis der Verbindung der Seltenen Erden zu Aluminiumverbindung der allgemeinen Formel (V) - (VII) beträgt 1:1 bis 1:1000, bevorzugt 1:3 bis 1:200, besonders bevorzugt 1:3 bis 1:100. Das Molverhältnis der Verbindung der Seltenen Erden zur weiteren Lewis-Säure beträgt 1:0,4 bis 1:15, bevorzugt 1:0,5 bis 1:8. Die eingesetzten Katalysatorkonzentrationen liegen üblicherweise im Bereich von 0,001-2 mmol Verbindung der Seltenen Erden pro 100 g Monomer, insbesondere 0,03-1 mmol, ganz besonders 0,05-0,2 mmol.

Die Verbindungen der Seltenen Erden können ungeträgert oder geträgert eingesetzt werden. Auch die Aluminiumverbindung/Aluminiumverbindungen und/oder die Lewis-Säure oder Lewis-Säuren können ungeträgert oder geträgert eingesetzt werden. Es ist auch möglich, nur die Verbindung der Seltenen Erden oder die Aluminiumverbindung oder die Lewis-Säure/Lewis-Säuren in geträgerter Form einzusetzen oder alle Komponenten gemeinsam zu trägern.

Bevorzugt werden alle Komponenten gemeinsam geträgert eingesetzt.

Als Träger können organische oder anorganische teilchenförmige Feststoffe mit einer spezifischen Oberfläche größer als 10, bevorzugt 10 bis 1 000 m²/g (BET) und einem Porenvolumen von 0,3 bis 15, bevorzugt von 0,5 bis 12 ml/g eingesetzt.

Die spezifische Oberfläche (BET) wird in üblicher Weise bestimmt nach S. Brunauer, P.H. Emmet und Teller, J. Anorg. Chem.Soc. 60 (2), 309 (1938), das Porenvolumen wird bestimmt durch die Zentrifugationsmethode nach M. McDaniel., J.Colloid Interface Sci. 78, 31(1980).

Als Träger eignen sich insbesondere Silicagele, Fällungskieselsäuren, Tone, Alumosilikate, Talkum, Zeolithe, Russ, Aktivkohlen, anorganische Oxide, wie Siliciumdioxid, Aluminiumoxid, Magnesiumoxid, Titandioxid, Siliciumcarbid, Polyethylen, Polystyrol oder Polypropylen bevorzugt sind Silicagele, Fällungskieselsäuren, Zeolithe, Polystyrol, Polyropylen und Russ, besonders bevorzugt Silicagel, Fällungskieselsäuren, Polypropylen und Russ. Der Träger kann dem Katalysatorsystem gegenüber inert sein oder funktionelle Gruppen enthalten, die eine oder mehrere Komponenten des Katalysators chemisch anbindet. Unter inert wird in diesem Fall verstanden, dass die Feststoffe weder eine reaktive Gruppen an der Oberfläche aufweisen noch adsorbiertes Material enthalten, die die Bildung eines aktiven Katalysators hindern bzw. mit den Monomeren reagieren.

Die genannten Feststoffe, die der obengenannten Spezifikation genügen und deshalb für den Einsatz geeignet sind, werden beispielsweise näher beschrieben in Ullmanns, Enzyclopädie der technischen Chemie, Band 21, S. 439 ff. (Silicagele), Band 23, S. 311 ff. (Tone), Band 14, S. 633 ff. (Russe), Band 24, S575 ff. und Band 17, S. 9 ff. (Zeolithe).

Die Feststoffe können einzeln oder im Gemisch untereinander eingesetzt werden.

Auf 100 g des Trägers werden 0,1 mMol bis 1 Mol der Verbindung der Seltenen Erden, bevorzugt 1 bis 50 mMol eingesetzt.

Es ist auch möglich, den gegebenenfalls geträgerten Katalysatorkomponenten noch eine weitere Komponente zuzusetzen. Diese weitere Komponente ist ein konjugiertes Dien, das das gleiche Dien sein kann, das später mit dem Katalysator polymerisiert werden soll. Bevorzugt werden verwendet Butadien und Isopren. Besonders bevorzugt Isopren,

Wird die weitere Komponente dem Katalysator zugesetzt, so beträgt die Menge bevorzugt 1 - 1 000 mol, bezogen auf 1 Mol der Verbindung der Seltenen Erden, besonders bevorzugt 1 - 100 Mol. Ganz besonders bevorzugt werden 1- 50 Mol, bezogen auf 1 Mol der Verbindung der Seltenen Erden.

Das erfindungsgemäße Verfahren kann bei Drücken von 0,5 bis 50 bar, bevorzugt 1 bis 20 bar durchgeführt werden.

Die Temperatur kann in weiten Bereichen variiert werden. Sie hängt im wesentlichen von der Löslichkeit der verwendeten Einsatzstoffe ineinander sowie vom Molgewicht und der Feststoffkonzentration ab.

Im allgemeinen wird die Polymerisation bei Temperaturen von -10 bis 250°C, bevorzugt bei 10 bis 200°C, besonders bevorzugt bei 20 bis 160°C, durchgeführt,

Die Polymerisation kann in üblichen, für Polymerisationsreaktionen geeigneten Aparaturen, koninuierlich oder diskontinuierlich durchgeführt werden, z.B. in einer Rührkesselkaskade oder einem gerührten Reaktor.

Die Polymerkonzentration beträgt im allgemeinen im Bereich von 5-50 Gew.-%.

Um ein Verkleben der wachsenden Polymerteilchen zu vermeiden, kann der Zusatz von bekannten Pudermitteln hilfreich sein. Als Pudermittel können alle inerten, feinkörnigen Feststoffe verwendet werden, insbesondere auch die als Träger beschriebenen inerten, anorganischen Feststoffe. Der Durchmesser der Primärteilchen der Pudermittel kann zwischen 1 und 100 nm liegen. Wenn die Primärteilchen Aggregate oder Agglomerate bilden, liegt der Durchmesser dieser Teilchen zwischen 1 und 500 µm. Die Menge an beigegebenen Pudermittel richtet sich nach den übrigen Verfahrensparametern, wie Temperatur, Feststoffgehalt, und lässt sich vom Fachmann leicht durch wenige Versuche optimieren. Im allgemeinen werden bis zu 30 Gew.-% Pudermittel zugegeben, insbesondere im Bereich von 0-20 Gew.-%, ganz besonders im Bereich von 0-5.

Die Suspensionspolymerisation hat den Vorteil, dass die Reaktionsmischung aufgrund der niedrigen Viskosität leichter zu bewegen ist als eine vergleichbare Reaktionslösung in einer Lösungspolymerisation oder einer Massepolymerisation. Dies hat auch positive Effekte auf die Wärmeabfuhr und das Fließverhalten der Reaktionsmischung, u.a. in Rohrleitungen.

Die erhaltenen Polymerisate weisen einen Gehalt an cis-1,4-Doppelbindungen von etwa 60 bis 99 % auf. Das Molgewicht kann durch die Zusammensetzung des Katalysators und durch die Variation der Polymerisationsbedingungen verändert werden. Üblich sind Molgewichte von 10³ bis 10⁷, gemessen mit GPC (Gel-Permeations-Chromatographie).

Das Molgewicht kann in bekannter Weise durch die Polymerisationsbedingungen, die Katalysatorzusammensetzung oder den Einsatz von Reglern eingestellt werden. Als Regler kommen z.B. Hydridverbindungen, Aromaten oder kummulierte Diene in Betracht.

Die Mooneyviskosität, ML (1+4', 100°C), liegt üblicherweise im Bereich zwischen 30 und 180 ME. Durch die Polymerisation in der Gasphase können auch sehr hochmolekulare Polymere hergestellt werden, die durch Lösungspolymerisation wegen der hohen Viskosität nur unter extrem hohem Aufwand zugänglich sind.

Die erhaltenen Polymerisate können auf übliche Weise isoliert, compoundiert und vulkanisiert werden. Sie zeichnen sich durch eine große Oberfläche aus.

Die erhaltenen Polymerisate eignen sich zur Herstellung von Formkörpern aller Art, insbesondere Reifen, technische Gummiwaren und zur Abmischung mit Polystyrol (HIPS).

Die nachfolgenden Beispiele sollen die vorliegend beschriebene Erfindung verdeutlichen, ohne diese jedoch auf diese Beispiele einzuschränken.

### Beispiele

### Beispiel 1

### a) Vorbehandlung des Trägers:

Als Träger wurde Zeosil 1165 MP verwendet. Zeosil 1165 MP ist eine gefällte Kieselsäure der Fa. Rhône-Poulenc mit einer mittleren Teilchengröße von 252 µm, einer Oberfläche nach BET von 139 m²/g. Das Porenvolumen beträgt 1,97 ml/g. Vor dem Einsatz war das Zeosil 1165 MP bei 900°C im Stickstoff-Gegenstrom getrocknet und unter Ausschluss von Luft und Feuchtigkeit abgefüllt worden.

### b) Herstellung des Katalysators:

Ein Katalysator wurde hergestellt, indem in einem 1 l-Kolben, ausgerüstet mit einer N2-Zuführung und einem Magnetrührer, 120 ml trockenes n-Hexan, 150 mMol Diisobutylaluminiumhydrid (DIBAH) und 5,0 mMol Ethylaluminiumsesquichlorid (EASC) vermischt wurden. Nachdem 1,25 g Butadien in die Lösung eingeleitet worden waren, wurden 5,0 mMol Neodymversatat (NDV) zugegeben. Das resultierende Gemisch wurde zu einer Aufschlämmung von 100 g des unter a) beschriebenen Trägers in 200 ml n-Hexan gegeben. Nach 5 Minuten wurde der Ansatz im Vakuum zur Trockne eingedampft. Es wurden 106 g eines frei fließenden Pulvers isoliert.

### c) Herstellung eines Pudermittels

100 g Zeosil ZS45 wurden mit einer Lösung von 25 mmol DIBAH, gelöst in 300 ml Hexan, versetzt und unter Rühren im Vakuum zur Trockne eingedampft.

### d) Polymerisation:

Die Polymerisation wird in einem 2-Liter-Reaktor der mit einem Rührer und Temperaturfühler sowie einem Mantel zur Kühlung und Heizung ausgestattet ist, durchgeführt. Es werden 350 g Butan und 90 g Butadien einkondensiert. Anschließend wird auf 40°C aufgeheizt und es werden 8,7 g des unter a) beschriebenen Katalysatorsystems und 7,6 g des wie unter c) beschriebenen vorbehandelten Pudermittels zugefügt. Der Ansatz wird 1:45 Stunden bei 40°C gerührt. Im gesamten Verlauf des Versuches ist die Suspension niedrigviskos, gut rührbar und es treten keine Ablagerungen am Rührer oder der Reaktorwand auf. Danach wird die Reaktion durch Zugabe von 10 ml Ethanol abgestoppt und Butan und überschüssiges Monomeres abgedampft. Die Ausbeute betrug 86 g (77,4 %).

### Beispiel 2a - d

Eine 1-l Flasche wurde getrocknet, mit Stickstoff inertisiert und mit einer Septumkappe versehen. Anschließend wurde die Flasche mit 197 g C4-Schnitt (Zusammensetzung siehe Tabelle 2.1 befüllt und mit 303 g trockenem und inertem n-Hexan verdünnt. Unter Schütteln wurden anschließend bei 25°C in dieser Reihenfolge Diisobutylaluminiumchlorid (DIBAH) (20 %ig in Hexan), Ethylalumniumsesquichlorid (EASC) (0,25 %ig in Hexan) und Neodymversatat (20 %ig in Hexan) in den in Tabelle 2.2 angegebenen Mengen zugegeben. Die Polymerisation wurde in einem Wasserbad, das auf 60°C temperiert ist, unter Schütteln der Flasche ausgeführt. Die Polymerisationszeit betrug 2 Stunden. Die Polymerisation wurde durch Zugabe einiger Tropfen Ethanol abgestoppt, das Produkt mit 0,2 Teilen 2,6 Di-t.Butyl-p-Kresol (BHT) stabilisiert, mit Ethanol ausgefällt und unter vermindertem Druck bei 70°C getrocknet. Die flüssige Phase inklusive Fällungsmittel wurde auf nicht umgesetztes 1,3-Butadien untersucht (GC), die Polymerisate wurden mittels IR/NMR (cis-1,4-Gehalt), GPC (Mn und Mw), DSC (Glasübergang) und Mooney-Messung (Mooney-Wert ML 1+4 100°C) untersucht.

**Tabelle 2.1**

| Zusammensetzung C4-Schnitt | | |
|---|---|---|
| | vor Polymerisation [%] | nach Polymerisation [%] |
| Isobutan | 0,99 | 1,77 |
| n-Butan | 9,08 | 16,21 |
| trans-Buten | 5,03 | 9,00 |
| n-Butylen | 15,43 | 27,55 |
| Isobutylen | 20,25 | 36,16 |
| cis-Buten | 4,28 | 7,64 |
| neo-Pentan | 0,10 | 0,18 |
| 1,2-Butadien | 0,37 | 0,66 |
| 1,3-Butadien | 44,46 | 0,83 |

**Tabelle 2.2**

| Übersicht über Experimente | | | | |
|---|---|---|---|---|
| Beispiel | 2 a | 2 b | 2 c | 2 d |
| DIBAH | 1,75 ml | 2,5 ml | 2,8 ml | 3,5 ml |
| EASC | 7,8 g | 7,8 g | 11,1 g | 15,6 g |
| NdV | 0,35 ml | 0,35 ml | 0,5 ml | 0,5 ml |
| Ausbeute | 73,3 g | 76,2 g | 81,1 g | 83,6 g |
| Mooney-Wert | 87 ME | 72 ME | 53 ME | 37 ME |
| cis-1,4-Gehalt | 98,4 % | 98,2 % | 98,1 % | 97,5 % |
| Glasübergang | - 109,9 °C | - 112,4 °C | - 110,7 °C | - 113,2 °C |
| Mn | 106 kg/mol | 86 kg/mol | 52 kg/mol | 40 kg/mol |
| Mw | 580 kg/mol | 561 kg/mol | 396 kg/mol | 338 kg/mol |
| Mw/Mn | 5,49 | 6,48 | 7,55 | 8,52 |

### Beispiel 3

Es wurde wie in Beispiel 2a - d gearbeitet, jedoch der C4-Schnitt nicht mit Hexan verdünnt.

Folgende Tabelle 3 gibt über die eingesetzten Mengen und Resultate Auskunft:

**Tabelle 3**

| Mengen und Resultate aus Beispiel 3 | |
|---|---|
| DIBAH | 1,75 ml |
| EASC | 7,8 g |
| NdV | 0,35 ml |
| Gesamtmenge C4-Schnitt | 300 g |
| 1,3-Butadienanteil | 45,5 % |
| Ausbeute | 107,6 g |
| Mooney-Wert | n. b. |
| cis-1,4-Gehalt | 98,7 % |
| Glasübergang | - 111,5 °C |
| Mn | 312 kg/mol |
| Mw | 940 kg/mol |
| Mw/Mn | 3 |

### Beispiel 4:

Es wurde wie in Beispiel 2a - d gearbeitet, jedoch wurden hier 329 g n-Hexan als Verdünnungsmittel zugegeben. Im eingesetzten C4-Schnitt waren 74,25 % 1,3-Butadien und 0,848 % 1,2-Butadien enthalten. Zusätzlich wurde in 4b - d zusätzlich 1,2-Butadien zu dem bereits im C4-Schnitt enthaltenen 1,2-Butadien zugegeben. Tabelle 4 gibt über die eingesetzten Mengen und Resultate Auskunft.

**Tabelle 4**

| Mengen und Resultate Beispiele 4a - d | | | | |
|---|---|---|---|---|
| Beispiel | 4 a | 4 b | 4 c | 4 d |
| DIBAH | 3,5 ml | | | |
| EASC | 15,6 g | | | |
| NdV | 0,7 ml | | | |
| Menge C4-Schnitt | 180 g | | | |
| Zusatz 1,2-Butadien | -- | 0,42 g | 0,84 g | 1,68 g |
| Ausbeute | 71,4 g | 71,0 g | 71,5 g | 70,3 g |
| Mooney-Wert | 28 ME | 33 ME | 23 ME | 19 ME |
| cis-1,4-Gehalt | 97,2 % | 97,3 % | 98,0 % | 98,0 % |
| Glasübergang | - 109,4 °C | - 110,4 °C | - 103,6 °C | - 112,2 °C |
| Mn | 56 kg/mol | 50 kg/mol | 50 kg/mol | 44 kg/mol |
| Mw | 410 kg/mol | 364 kg/mol | 363 kg/mol | 303 kg/mol |
| Mw/Mn | 7,36 | 7,32 | 7,23 | 6,93 |

### Beispiel 5

Beispiel 4a wurde wiederholt. Jedoch wurden anstatt n-Hexan 280 g Cyclohexan, statt NdV 4,8 g Nickeloktoat (10 %ig in Hexan), statt EASC 0,6 g BF₃(Et₂O) und statt DIBAH 3,4 g Triethylaluminium eingesetzt. Es fand keine Reaktion statt.

### Beispiele 6 a - f

### Herstellung des Pudermittels:

Als Pudermittel wurde Vulkasil S (VS S) oder Zeosil ZS 45 (ZS 45) verwendet. Vulkasil S ist eine Fällungskieselsäure (Degussa) mit einer mittleren Teilchengröße von 18 µm, einer Oberfläche nach BET von 164 m²/g und einem Porenvolumen von 1,91 ml/g. Vulkasil S wird vor Vorwendung als Pudermittel bei 900°C im Stickstoffgegenstrom getrocknet und unter Ausschluss von Luft und Feuchtigkeit abgefüllt.
Danach wird Vulkasil S analog Beispiel 1c) mit 250 µmol DIBAH /g belegt.

Zeosil ZS 45 wurde analog Beispiel 1c) hergestellt.

### Herstellung der Katalysatoren:

Die verwendeten Katalysatoren wurden analog Beispiel 1b) hergestellt und enthalten unterschiedliche Mengen Neodymversatat NDV/g Katalysator und verschiedene Mengen DIBAH/NDV
(s. Tabelle 6.1).

**Tabelle 6.1**

| | **NDV / g Katalysator** | **DIBAH / NDV** |
|---|---|---|
| **Katalysatorsystem I** | 94,4 | 20 : 1 |
| **Katalysatorsystem II** | 138,1 | 20 : 1 |
| **Katalysatorsystem III** | 72,6 | 20 : 1 |
| **Katalysatorsystem IV** | 72,6 | 30 : 1 |

Die folgenden Beispiele 6 a ― f liefern feinteilige BR-Suspensionen und belegen damit die Stabilität des dispersen Systems BR/Butadien/Butan über einen breiten Temperaturbereich:

### Polymerisationsvorschrift:

In einen 3 l Stahlautoklaven, der mit mechanischem Rührer, Drehmomentaufnehmer, Temperaturfühler, Manometer, Schleuse sowie einem Mantel zur Heizung bzw. Kühlung ausgestattet ist, wird die entsprechende Menge des Pudermittels (Vulkasil S oder Zeosil ZS 45) gegeben. Danach wird der Reaktor evakuiert und mit ca. 500 g Butan und ca. 200 g Butadien befüllt. Das Polymerisationsgemisch wird auf die gewünschte Polymerisationstemperatur thermostatiert. Nach Zugabe des Katalysators wird 60 min polymerisiert. Während des gesamten Versuchsverlaufes ist die Suspension niedrigviskos und gut rührbar. Zudem treten an Rührer und Reaktorwand keine Ablagerungen auf.
Um die Feinteiligkeit der Produkte optisch beurteilen zu können, wird wie folgt aufgearbeitet: Das Reaktionsgemisch wird auf 25°C gekühlt und durch Zugabe von 600 ml einer 0,5 Gew.%-igen Lösung von Vulkanox BKF in Aceton abgestoppt.

Butan und nicht polymerisiertes Butadien werden abgedampft. In allen Beispielen wird das Polymer in Form einer feinteiligen Suspension in Aceton erhalten und nach Filtration im Vakuumtrockenschrank bei 50°C getrocknet. Reaktionsbedingungen und Ausbeuten der einzelnen Versuche sowie die Polymereigenschaften der erhaltenen Polymere sind in Tabelle 6.2 aufgeführt.

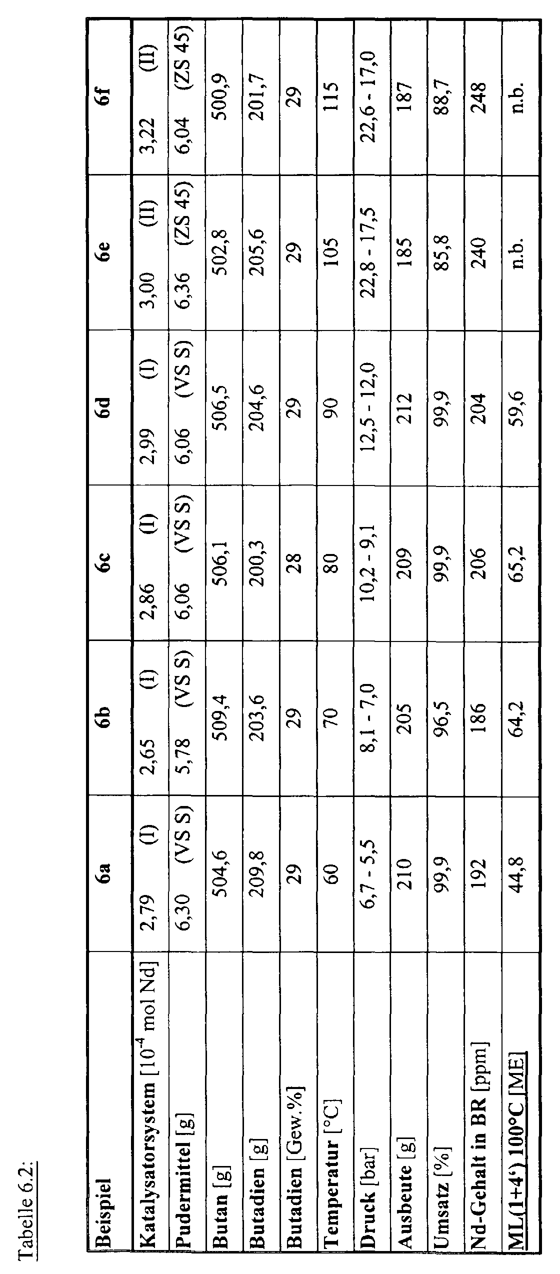

### Beispiele 7 a - f

Die folgenden Polymerisationsbeispiele zeigen die Stabilität des dispersen Systems BR/Butadien/Butan auch bei Polymerisation von Gemischen mit hohen Monomerkonzentrationen.

Pudermittel und Katalysator werden in den entsprechenden Mengen in einen 3 l Stahlautoklaven, der mit mechanischem Rührer, Drehmomentaufnehmer, Temperaturfühler, Manometer und einem Mantel zur Heizung bzw. Kühlung ausgestattet ist, gegeben. Danach wird der Reaktor evakuiert und mit ca. 420 g Butan und ca. 280 g Butadien befüllt. Nach Thermostatieren des Polymerisationsgemisches auf die gewünschte Polymerationstemperatur wird 60 min polymerisiert. In allen Versuchen ist während des gesamten Versuchsverlaufes die Suspension niedrigviskos und gut rührbar. An Rührer und Reaktorwand treten keine Ablagerungen auf. Das Reaktionsgemisch wird auf 25°C gekühlt und zur optischen Beurteilung der Feinteiligkeit der Suspension durch Zugabe von 600 ml einer 0,5 Gew.%-igen Lösung von Vulkanox BKF in Aceton abgestoppt. Butan und nicht polymerisiertes Butadien werden abgedampft. Das Polymer wird in allen Versuchen in Form einer feinteiligen Suspension in Aceton erhalten und im Vakuumtrockenschrank bei 50°C getrocknet. Reaktionsbedingungen und Ausbeuten der einzelnen Versuche sind in Tabelle 7 aufgeführt.

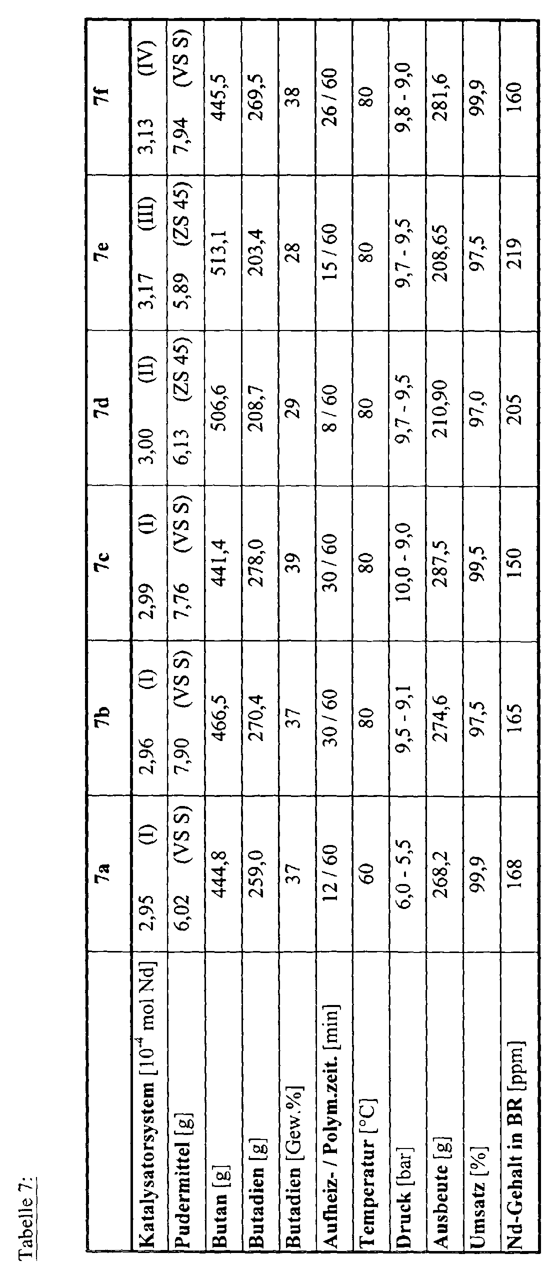

## Patentansprüche

1. Verfahren zur Suspensions-Polymerisation von konjugierten Dienen in Kohlenwasserstoffgemischen mit über 80 % Volumen-Anteil an C₄-Kohlenwasserstoffen, dadurch gekennzeichnet, dass man in Gegenwart einer Verbindung der Seltenen Erden, einer oder mehrerer Aluminiumverbindungen und gegebenenfalls einer weiteren Lewis-Säure polymerisiert.

2. Verfahren gemäß Anspruch 1, dadurch gekennzeichnet, dass man als Kohlenwasserstoffgemisch ein technisches C₄-Kohlenwasserstoffgemisch verwendet.

3. Verfahren gemäß einem oder mehreren der Ansprüche 1 bis 2, dadurch gekennzeichnet, dass das Kohlenwaserstoffgemisch 1,2-Butadien enthält.

4. Verfahren gemäß einem oder mehreren der Ansprüche 1 bis 3, dadurch gekennzeichnet, dass man als Verbindung der Seltenen Erden eine Neodymverbindung oder ein Gemisch aus einer Neodymverbindung mit einer weiteren Verbindung der Seltenen Erden einsetzt.

5. Verfahren nach einem oder mehreren der Ansprüche 1 bis 4, dadurch gekennzeichnet, dass man den Katalysator oder einzelne Katalysatorkomponenten auf einen Träger aufbringt.

6. Verfahren gemäß einem oder mehreren der Ansprüche 1 bis 5, dadurch gekennzeichnet, dass man in Gegenwart eines Pudermittels polymerisiert.

7. Polymerisat erhältlich in einem Verfahren gemäß einem oder mehreren der Ansprüche 1 bis 5.

8. Verwendung des Polymerisates gemäß Anspruch 7 zur Herstellung von Reifen, technischen Gummiwaren und zur Abmischung mit Polystyrol (HIPS).
